# EUROPEAN PATENT SPECIFICATION

(11) **EP 2 035 240 B1**
(45) Date of publication and mention of the grant of the patent: **17.08.2016**
(21) Application number: 07720772.8
(22) Date of filing: 13.04.2007
(51) Int. Cl.: B44C 3/02, G02C 11/02, B32B 27/00, B44C 1/17, B44C 5/00

(54) **LAMINATE FOR EYEGLASS FRAME WITH EMBEDDED DECORATIVE DESIGN PATTERN AND MANUFACTURING METHOD THEREOF**
LAMINAT FÀR BRILLENRAHMEN MIT EINGEBETTETEM DEKORATIVEM DESIGNMUSTER UND HERSTELLUNGSVERFAHREN DAFÜR
STRATIFIÉ POUR MONTURES DE LUNETTES À MOTIFS DÉCORATIFS ET SON PROCÉDÉ DE PRODUCTION

(30) Priority: 30.04.2006 CN 200620113601 U; 05.09.2006 IT MI20061693; 07.09.2006 US 824782 P; 11.09.2006 CN 200620138916 U
(43) Date of publication of application: 18.03.2009
(73) Proprietor: OKIA Optical Co., Ltd., Kowloon, Hong Kong (CN)
(72) Inventor: ZOU, Yanhui, Shenzhen Guangdong (CN)
(74) Representative: Serjeants LLP
(86) International application number: PCT/CN2007/001199
(87) International publication number: WO 2007/128196

(56) References cited:
- EP-A1- 0 457 579
- CN-Y- 2 444 789
- GB-A- 1 388 680
- GB-A- 2 169 239
- JP-A- 2004 338 246
- US-A- 2 867 053
- US-A- 3 898 781
- US-A- 4 057 921
- US-A- 4 665 598
- US-A- 5 923 395

## Description

### BACKGROUND OF THE INVENTION

The present invention relates generally to producing patterned laminates, in particular, to patterned laminates for eyeglass frames.

Eyeglass manufacturers have been making continuous effort in designing a great variety of eyeglass to satisfy consumers' needs and favorites. Eyeglass can alleviate eye defects such as myopia, hyperopia or astigmatism; or protect the eyes against bright daylight and ultraviolet light from the sun, hence become an essential product in daily life. Being worn on the face, it is often desirable that the design of eyeglass being aesthetic, gradually eyeglass also serves as a fashion accessory and even form part of the identity of some celebrities. The ornamentation of eyeglass is available in a wide range of styles, materials, premium designs, and further decorated with a selection of colors and patterns in the frames, including temples, eyeglass fronts, rims and bridges, to meet the preference of different consumers.

In conventional art, the decorative designs are two dimensional patterns or graphics. To produce eyeglass frames with decorative patterns, such patterns are usually transferred on the material surface, and further coated with a protective plastic layer. Because the protective layer can be worn out after prolonged use, ultimately the transferred patterns will also be depleted.

Accordingly, laminate material for eyeglass frame was developed and manufactured by the known method: A first plastic sheet is firstly pasted with a glue layer, which is then printed with desired patterns by silk screen printing. The intermediate laminate is pasted with another glue layer and glued to a second plastic sheet, and subsequently adhered together by hot compression. The resulting laminate has decorative patterns embedded between the two plastic sheets and is difficult to be worn out during use. However, the relevant configuration and manufacturing process of such laminate is complex, and has a lengthy production cycle. Further, a different silk screen is required if a different pattern is to be printed, resulting in low productivity and high manufacturing cost.

Cellulose Acetate is one of the most common thermoplastic materials applied on eyewear. It allows patterns to be transferred on thermoplastic sheets and overcomes the limitation for injection plastics.

In conventional technologies, eyeglass thermoplastic sheet has to be coated with a glue layer, and then printed with patterns by silk screen printing. When the ink dries up, another glue layer will be coated and adhere with a second plastic sheet by compression or thermal process. These techniques however are costly and time consuming, especially for producing polychrome patterns.

First of all, silk screen printing requires one mask for each monochrome and only one monochrome can be printed each time. In addition, to manufacture products with different patterns, a different set of silk screens is required. It also takes a long time to verify the silk screen pattern and the effect on sheet material, resulting in an extended production cycle. Furthermore, the pattern cannot be very fine because the ink is applied to the back of the image carrier and pushed through porous or open areas.

The conventional method is also limited to producing two dimensional patterns or graphics. This is disclosed in GB 13 886 80.

Thus, a need exists to improve the current manufacturing process for producing high density patterned cellulose acetate or thermoplastic laminate which is further embedded with materials like three dimensional articles or fluids.

### BRIEF DESCRIPTION OF THE INVENTION

The invention is defined by the appended claims.

In a first aspect of the present disclosure, there is provided a laminate with internal decorative design for eyeglass frames. The laminate comprises: a plurality of core layers of thermoplastic sheets printed with patterns by transfer printing, a first overlay layer of thermoplastic sheet; a second overlay layer of thermoplastic sheet; wherein said core layers are sandwiched between said first overlay layer and said second overlay layer.

The core layers further enclose three dimensional articles. The three dimensional articles enclosed in core layers may be dry flowers, rhinestones, dry leaves or metal foil logo. The core layers may further enclose at least one kind of fluid, said fluids are immiscible with each other. The fluid enclosed in core layers may be colored or clear water, oil based fluid, or liquid silicone. The transfer printing may be heat pressing transfer, water transfer, vapor transfer, screen printing, or stencil printing. The thermoplastic may be cellulose acetate, cellulose acetate propionate, polycarbonate, TPE or nylon. The core layers and overlay layers may be adhered together by application of adhesive substance, application of heat, or application of pressure. The core layers and overlay layers may be bonded together by thermoform or lamination. The patterns printed on core layers may be monochromatic or polychromatic.

According to another aspect of the present invention, there is provided a process for manufacturing a laminate with internal decorative pattern for eyeglass frames. The process comprises the steps of: a) preparing a plurality of core layers, a first overlay layer and a second overlay layer from thermoplastic sheets, b) printing patterns on said core layers by transfer printing, c) layering from top to bottom said first overlay layer, said core layers and said second overlay layer, and d) bonding the layer of sheets from step (c).

The bonding step may be application of adhesive substance, application of heat, or application of pressure. The bonding step may be the step of thermoform or lamination. The bonding step may comprise the step of applying a temperature in the range of 0°C to 300°C and a pressure starting from 0 atm. The process may further comprise the step of laying particles on core layers before bonding said composite layer of sheets.

The process further comprises the steps of: a) making cavities in said core layers before applying heat to said composite layer of sheets to enclose three dimensional articles or fluids, and b) positioning or filling said articles or fluids in said cavities. The thermoplastic may be cellulose acetate, cellulose acetate propionate, polycarbonate, TPE or nylon. The transfer printing may be heat pressing transfer, water transfer, vapor transfer, screen printing, or stencil printing. The heat pressing transfer may be a process of temperature in the range of 0°C to 300°C. The three dimensional articles enclosed in core layers may be dry flowers, rhinestones, dry leaves or metal foil logo. The fluid enclosed in core layers may be colored or clear water, oil based fluid or liquid silicone. Other aspects of the invention are also disclosed.

### BRIEF DESCRIPTION OF THE DRAWINGS

One or more embodiments are now described with reference to the drawings, in which:
Fig. 1 shows the exploded view of a laminate embedded with planar pattern;
Fig. 2a shows the exploded view of a laminate embedded with three dimensional articles and fluids;
Fig. 2b shows the cross sectional view of a laminate embedded with three dimensional articles;
Fig. 3 shows the exploded view of a laminate embedded with particles;
Fig. 4 shows the perspective view of a laminate embedded with immiscible fluids;
Fig. 5 shows the perspective view of a laminate embedded with immiscible fluids and floating articles.

### DETAILED DESCRIPTION OF THE INVENTION

Where reference is made in any one or more of the accompanying drawings to steps and/or features, which have the same reference numerals, those steps and/or features have for the purposes of this description the same function(s) or operation(s), unless the contrary intention appears.

The preferred method described herein provides a laminate with internal pattern for eyeglass frames, such patterns and colors will not be affected by external conditions during use, and provide further advantages of simple configuration, low cost and short production cycle. The patterns can be in the form of two-dimensional art, particles, three dimensional articles, fluids, or a combination of the above.

In one embodiment, the laminate with internal pattern is assembled from a top layer, at least one middle layer or core layer, and a bottom layer. Adhered between the inner surface of the top and bottom layer is the core layer of thermoplastic sheets with decorative patterns printed by transfer printing. The top layer is a transparent thermoplastic sheet, whereas the middle and bottom layers can be transparent, semi-transparent, non-transparent thermoplastic sheet. The thermoplastic sheets can be made of common thermoplastic materials in the industry such as cellulose acetate, cellulose acetate propionate, polycarbonate, TPE or nylon.

The core layers described above are printed with patterns by transfer printing and adhered to the inner surface of the top layer or the inner surface of the bottom layer. The thermoplastic layers are bonded together by application of heat and pressure.

The method of transfer printing can be selected from common technologies in the industry including heat pressing transfer, water transfer, vapor transfer, screen printing, and stencil printing.

The layers can be adhered together by common method in the industry such as the use of adhesive substance, thermoform or lamination.

It is one of the advantages of the present invention that the printed patterns will not be affected by external conditions. Compared to conventional silk screen printing technology, the present invention provides a simple manufacturing process, short production cycle, and simple product configuration.

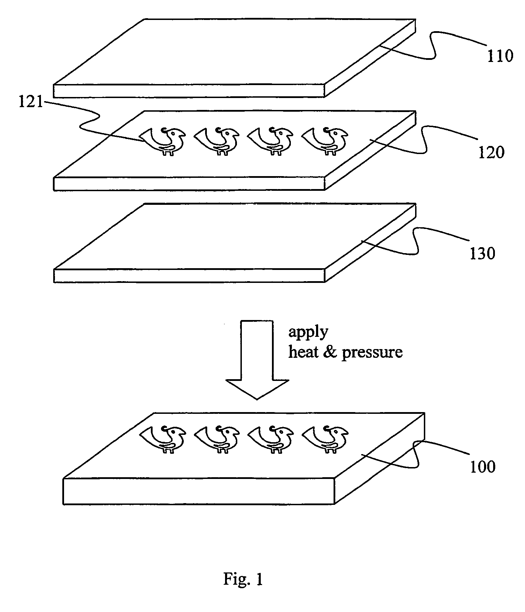

Disclosed in Fig. 1 is a non-calimed laminate for eyeglass frames. The laminate 100 comprises a top layer 110, a core layer 120, and a bottom layer 130. The bottom layer 130 is a thermoplastic sheet, the top layer 110 is a transparent thermoplastic sheet which can be chromatic or crystal clear. Adhered to the top layer 110 and bottom layer 130 is the core layer 120 printed with high density pattern 121 by transfer printing. The adhesion of the three layers can be accomplished by adhesive substances, such as UV glue or Acetone, thermoforming or any form of lamination. For complicated patterns or special pattern effects, more layers of pattered thermoplastic sheets can be adhered or sandwiched as a stack of thermoplastic between the top and bottom layers.

The thermoplastic used in the top layer 110, core layer 120 and bottom layer 130 is material that can re-soften and distort from its formed shape when heat above a critical temperature peculiar to the material. In the preferred embodiment of the disclosure, the thermoplastic material is cellulose acetate.

During transfer printing, a desired pattern with mirror image from a media is transferred to the core layer 120 by one of the following methods: heat pressing transfer, water transfer, vapor transfer, screen printing or any form of stencil printing. The media can be in the form of film, paper, fabric or any substance on which pattern is able to be printed. The heat pressing transfer involves a process in the temperature range from 0°C to 300°C. The pattern being transferred to the core layer 120 can be monochrome or polychrome.

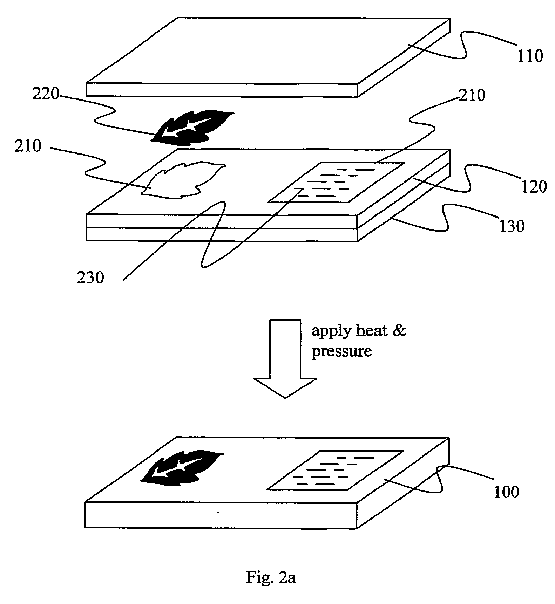

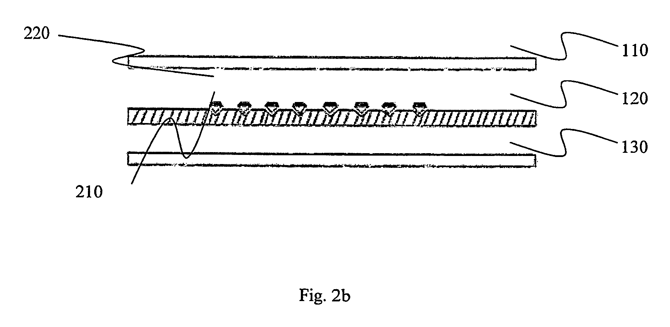

Fig. 2a and 2b discloses a laminate according to the invention which has three dimensional articles or fluids embedded into the laminate, cavity 210 is created in the core layer 120 prior to adhering the top layer 110 to enclose the three dimensional articles 220 or fluids 230. The size and shape of the cavity 210 is created in a way to match the articles 220 or to contain the fluids 230. The process can be performed by drilling or grinding depending on the size and shape of the desired cavity. After the cavity 210 is created, the core layer 120 is adhered to the bottom layer 130. Articles are then positioned in the cavities of the core layer 120. In the case of fluid, it is filled in the cavities by injection apparatus or dropper.

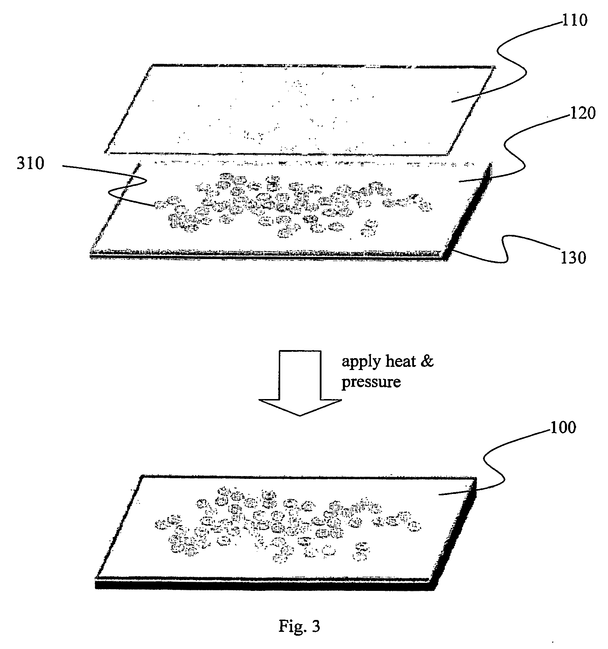

Fig. 3 further discloses a non-claimed which has particles embedded into the laminate. Since the size of the particles 310 are small relative to the thickness of the thermoplastic layers, no cavity is required to be made in the core layer 120. The particles 310 are positioned on the core layer 120 to form the desired patterns.

After positioning the particles or three dimensional articles, or filling the fluids to the core layer 120, the top layer 110 is adhered to the core layer 120 as a coating to the patterns. The composite structure is then applied with temperature in the range of 0°C to 300°C and a pressure starting from 0 atm to bond the layers together and form a patterned laminate 100.

The articles or fluids embedded in the eyeglass frame can serve decorative or functional purpose. The three dimensional articles to be enclosed in the laminate can be selected from articles including dry flowers, rhinestones, dry leaves and metal foil logo. The fluids to be enclosed in the laminate can be selected from fluids including colored or clear water, oil based fluid, and liquid silicone.

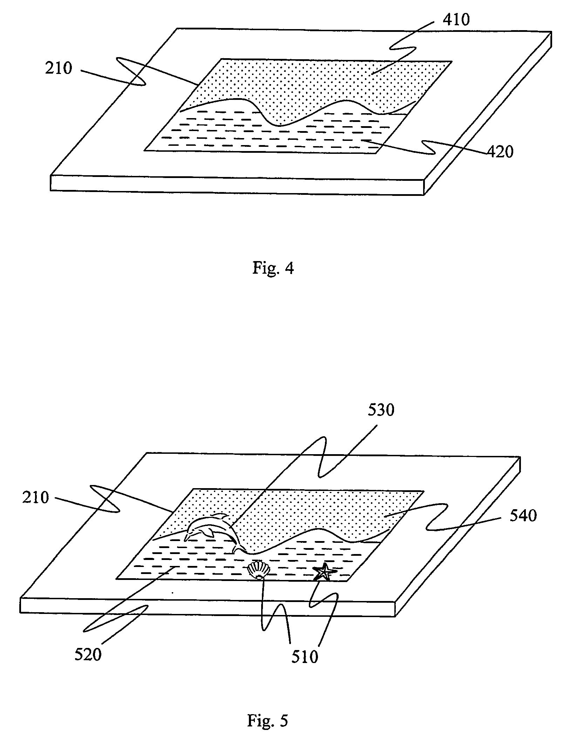

Fig. 4 describes a laminate in accordance with another embodiment of the invention, in which more than one type of immiscible fluid (410, 420) of different color can be embedded in the thermoplastic layers.

Fig. 5 describes a laminate in accordance with another embodiment, in which the cavity may further embed articles 510 which suspend in the fluid 520, or articles 530 which float on the surface of the fluid, or float at the boundary between two layers of fluids (520,540).

## Claims

1. A laminate (100) with internal decorative design for eyeglass frames, comprising:
one or more core layers (120) of thermoplastic sheets printed with patterns by heat pressing transfer;
a first overlay layer (110) of a transparent thermoplastic sheet;
a second overlay layer (130) of a non-transparent thermoplastic sheet;
wherein said core layers (120) are sandwiched between said first overlay layer (110) and said second overlay layer (130), **characterized in that** the core layer or layers comprise at least one cavity (210) and articles (510, 530), and wherein the size and shape of the cavity is created in a way to enclose the articles.

2. The laminate (100) with internal decorative pattern according to claim 1, wherein said articles are particles (310) or three dimensional articles (220).

3. The laminate as claimed in claim 2, wherein said three dimensional articles (220) enclosed in core layers (120) are selected from a group of articles consisting of: dry flowers, rhinestones, dry leaves and metal foil logo.

4. The laminate (120) with internal decorative pattern according to any preceding claim, wherein said core layers (120) further enclose at least one kind of fluid (230), said fluids are immiscible with each other.

5. The laminate (120) as claimed in claim 4, wherein said fluid (230) enclosed in core layers (120) is selected from a group of articles consisting of: colored or clear water, oil based fluid, and liquid silicone.

6. The laminate (100) with internal decorative pattern according to any preceding claim, wherein said thermoplastic is selected from a group of thermoplastics consisting of: cellulose acetate, cellulose acetate propionate, polycarbonate, TPE and nylon.

7. The laminate (100) with internal decorative pattern according to any preceding claim, wherein said core layers (120) and overlay layers (110, 130) are adhered together in a bonding method step selected from a group consisting of: application of an adhesive substance, application of heat, and application of pressure.

8. The laminate (100) with internal decorative pattern according to any preceding claim, wherein said core layers (120) and overlay layers (110, 130) are bonded together by thermoform or lamination.

9. A process for manufacturing a laminate (100) with internal decorative pattern for eyeglass frames, comprising:
a) preparing one or more core layers (120), a first overlay layer (110) from a transparent thermoplastic sheet and a second overlay layer (130) from a non-transparent thermoplastic sheet,
b) printing patterns on said core layers (120) by heat pressing transfer,
c) layering from top to bottom said first overlay layer (110), said core layers (120) and said second overlay layer (130), and
d) bonding the layer of sheets from step (c) in a bonding step,
wherein the process further comprising:
(e) making at least one cavity (210) in the one or more core layers (120); and
(f) positioning or filling articles (510, 530) or fluids (520, 540) in said at least one cavity (210).

10. The process for manufacturing a laminate (100) with internal decorative pattern according to claim 9, wherein said bonding step includes a step selected from a group consisting of: application of an adhesive substance, application of heat, and application of pressure.

11. The process for manufacturing a laminate (100) with internal decorative pattern according to claim 9, wherein said bonding step comprises the step of thermoform or lamination.

12. The process for manufacturing a laminate (100) with internal decorative pattern according to claim 10, wherein said bonding step comprises the step of applying a temperature in the range of 0°C to 300°C and a pressure starting from 0 atmosphere.

13. The process for manufacturing a laminate (100) with internal decorative pattern according to any of claims 9-12, further comprising laying particles (310) on core layers (120) before bonding said composite layer of sheets.

14. The process for manufacturing a laminate (100) with internal decorative pattern according to any of claims 9-13, wherein said thermoplastic sheets are selected from the group of thermoplastic consisting of: cellulose acetate, cellulose acetate propionate, polycarbonate, TPE and nylon.

15. The process for manufacturing a laminate (100) with internal decorative pattern according to claim 9, wherein said articles, which are three dimensional, that are enclosed in the core layers are selected from the group of articles consisting of: dry flowers, rhinestones, dry leaves and metal foil logo.

16. The process for manufacturing a laminate (100) with internal decorative pattern according to claim 9, wherein said fluid (410, 420) enclosed in core layers (120) are selected from the group consisting of: colored or clear water, oil based fluid, and liquid silicone.

## Patentansprüche

1. Laminat (100) mit eingeschlossenem Zierdekor für Brillenrahmen, enthaltend:
ein oder mehrere Kernschichten (120) aus thermoplastischen Platten, die mittels Thermotransferpressen mit Mustern bedruckt sind;
eine erste Überzugsschicht (110) aus einer transparenten thermoplastischen Platte;
eine zweite Überzugsschicht (130) aus einer nicht transparenten thermoplastischen Platte;
wobei die Kernschichten (120) sandwichartig zwischen der ersten Überzugsschicht (110) und der zweiten Überzugsschicht (130) eingeschlossen sind, **dadurch gekennzeichnet, dass** die Kernschicht oder -schichten mindestens einen Hohlraum (210) und Gegenstände (510, 530) aufweisen, und wobei die Größe und Form des Hohlraums so beschaffen sind, dass die Gegenstände eingeschlossen sind.

2. Laminat (100) mit eingeschlossenem Ziermuster nach Anspruch 1, wobei die Gegenstände Teilchen (310) oder dreidimensionale Gegenstände (220) sind.

3. Laminat nach Anspruch 2, wobei die in den Kernschichten eingeschlossenen dreidimensionalen Gegenstände (220) ausgewählt sind aus einer aus Trockenblumen, Strasssteinen, trockenen Blättern und einem Metallfolien-Logo bestehenden Gruppe von Gegenständen.

4. Laminat (120) mit eingeschlossenem Ziermuster nach einem beliebigen vorhergehenden Anspruch, wobei die Kernschichten (120) ferner mindestens eine Art von Fluid (230) einschließen, welche Fluide nicht miteinander mischbar sind.

5. Laminat (120) nach Anspruch 4, wobei das in den Kernschichten (120) eingeschlossene Fluid (230) ausgewählt ist aus einer aus gefärbtem oder klarem Wasser, Fluid auf Ölbasis und flüssigem Silikon bestehenden Gruppe.

6. Laminat (100) mit eingeschlossenem Ziermuster nach einem beliebigen vorhergehenden Anspruch, wobei der thermoplastische Kunststoff ausgewählt ist aus einer aus Zelluloseazetat, Zelluloseazetatpropionat, Polycarbonat, TPE und Nylon bestehenden Gruppe von thermoplastischen Kunststoffen.

7. Laminat (100) mit eingeschlossenem Ziermuster nach einem beliebigen vorhergehenden Anspruch, wobei die Kernschichten (120) und Überzugsschichten (110, 130) in einem Verbindungsverfahrensschritt miteinander verklebt werden, der ausgewählt ist aus einer Gruppe bestehend aus: Aufbringen eines Klebstoffs, Anlegen von Wärme und Anlegen von Druck.

8. Laminat (100) mit eingeschlossenem Ziermuster nach einem beliebigen vorhergehenden Anspruch, wobei die Kernschichten (120) und Überzugsschichten (110, 130) durch Warmformen oder Laminieren miteinander verbunden werden.

9. Verfahren zur Herstellung eines Laminats (100) mit eingeschlossenem Ziermuster für Brillenrahmen, enthaltend:
a) Vorbereiten einer oder mehrerer Kernschichten (120), einer ersten Überzugsschicht (110) aus einer transparenten thermoplastischen Platte und einer zweiten Überzugsschicht (130) aus einer nicht transparenten thermoplastischen Platte,
b) Drucken von Mustern auf die Kernschichten (120) durch Thermotransferpressen,
c) Übereinanderschichten der ersten Überzugsschicht (110), der Kernschichten (120) und der zweiten Überzugsschicht (130) von oben nach unten und
d) Verbinden der Plattenlage aus Schritt (c) in einem Verbindungsschritt,
wobei das Verfahren ferner enthält:
(e) Herstellen mindestens eines Hohlraums (210) in der einen oder den mehreren Kernschichten (120); und
(f) Positionieren oder Füllen von Gegenständen (510, 530) oder Fluiden (520, 540) in den mindestens einen Hohlraum (210).

10. Verfahren zur Herstellung eines Laminats (100) mit eingeschlossenem Ziermuster nach Anspruch 9, wobei der Verbindungsschritt einen Schritt enthält, der ausgewählt ist aus einer Gruppe bestehend aus: Aufbringen eines Klebstoffs, Anlegen von Wärme und Anlegen von Druck.

11. Verfahren zur Herstellung eines Laminats (100) mit eingeschlossenem Ziermuster nach Anspruch 9, wobei der Verbindungschritt den Schritt des Warmformens oder Laminierens umfasst.

12. Verfahren zur Herstellung eines Laminats (100) mit eingeschlossenem Ziermuster nach Anspruch 10, wobei der Verbindungschritt den Schritt des Anlegens einer Temperatur im Bereich von 0 °C bis 300 °C und eines von 0 Atmosphären ausgehenden Drucks umfasst.

13. Verfahren zur Herstellung eines Laminats (100) mit eingeschlossenem Ziermuster nach einem der Ansprüche 9-12, ferner enthaltend das Auflegen von Teilchen (310) auf die Kernschichten (120) vor dem Verbinden der Verbundschicht aus den Platten.

14. Verfahren zur Herstellung eines Laminats (100) mit eingeschlossenem Ziermuster nach einem der Ansprüche 9-13, wobei die thermoplastischen Platten ausgewählt sind aus der aus Zelluloseazetat, Zelluloseazetatpropionat, Polycarbonat, TPE und Nylon bestehenden Gruppe von thermoplastischen Kunststoffen.

15. Verfahren zur Herstellung eines Laminats (100) mit eingeschlossenem Ziermuster nach Anspruch 9, wobei die dreidimensionalen Gegenstände, die in den Kernschichten eingeschlossen werden, aus einer aus Trockenblumen, Strasssteinen, trockenen Blättern und einem Metallfolien-Logo bestehenden Gruppe ausgewählt werden.

16. Verfahren zur Herstellung eines Laminats (100) mit eingeschlossenem Ziermuster nach Anspruch 9, wobei das in den Kernschichten (120) eingeschlossene Fluid (410, 420) aus der aus gefärbtem oder klarem Wasser, einem Fluid auf Ölbasis und flüssigem Silikon bestehenden Gruppe ausgewählt ist.

## Revendications

1. Stratifié (100) à dessin de décoration interne pour montures de lunettes, qui comprend :
une ou plusieurs couche(s) centrale(s) (120) de feuilles thermoplastiques imprimées avec des motifs par transfert thermique ;
une première couche de superposition (110) de feuille thermoplastique transparente ;
une seconde couche de superposition (130) de feuille thermoplastique non transparente ;
dans lequel lesdites couches centrales (120) sont prises en sandwich entre ladite première couche de superposition (110) et ladite seconde couche de superposition (130), **caractérisé en ce que** la ou les couche(s) centrale(s) comprend/comprennent au moins une cavité (210) et des articles (510, 530), et dans lequel la taille et la forme de la cavité sont créées de manière à enfermer les articles.

2. Stratifié (100) à motif de décoration interne selon la revendication 1, dans lequel lesdits articles sont des particules (310) ou des articles en trois dimensions (220).

3. Stratifié selon la revendication 2, dans lequel lesdits articles en trois dimensions (220) enfermés dans les couches centrales (120) sont choisis parmi un groupe d'articles qui se compose de : fleurs séchées, de faux diamants, de feuilles séchées et d'un logo en feuille métallique.

4. Stratifié (120) à motif de décoration interne selon l'une quelconque des revendications précédentes, dans lequel lesdites couches centrales (120) enferment en outre au moins un type de liquide (230), lesdits liquides étant immiscibles les uns avec les autres.

5. Stratifié (120) selon la revendication 4, dans lequel ledit liquide (230) enfermé dans les couches centrales (120) est choisi parmi un groupe d'articles composé : d'eau colorée ou transparente, d'un liquide à base d'huile, et de silicone liquide.

6. Stratifié (100) à motif de décoration interne selon l'une quelconque des revendications précédentes, dans lequel ledit thermoplastique est choisi parmi un groupe de thermoplastiques composé : d'acétate de cellulose, de propionate d'acétate de cellulose, de polycarbonate, de TPE et de nylon.

7. Stratifié (100) à motif de décoration interne selon l'une quelconque des revendications précédentes, dans lequel lesdites couches centrales (120) et les couches de superposition (110, 130) sont collées ensemble à une étape de procédé de liaison choisie parmi un groupe composé : de l'application d'une substance adhésive, de l'application de chaleur, et de l'application de pression.

8. Stratifié (100) à motif de décoration interne selon l'une quelconque des revendications précédentes, dans lequel lesdites couches centrales (120) et les couches de superposition (110, 130) sont liées ensemble par thermoformage ou stratification.

9. Procédé de fabrication d'un stratifié (100) à motif de décoration interne, destiné à des montures de lunettes, qui comprend :
a) la préparation d'une ou plusieurs couche(s) centrale(s) (120), d'une première couche de superposition (110) à partir d'une feuille thermoplastique transparente, et d'une seconde couche de superposition (130) à partir d'une feuille thermoplastique non transparente,
b) l'impression de motifs sur lesdites couches centrales (120) par transfert par pressage à chaud,
c) la superposition, de haut en bas, de ladite première couche de superposition (110), desdites couches centrales (120) et de ladite seconde couche de superposition (130), et
d) la liaison de la couche de feuilles de l'étape (c) au cours d'une étape de liaison,
le procédé comprenant en outre :
(e) la création d'au moins une cavité (210) dans la ou les couche(s) centrale(s) (120) ; et
(f) le positionnement ou le remplissage d'articles (510, 530) ou de liquides (520, 540) dans ladite au moins une cavité (210).

10. Procédé de fabrication d'un stratifié (100) à motif de décoration interne selon la revendication 9, dans lequel ladite étape de liaison comprend une étape choisie parmi un groupe composé de : l'application d'une substance adhésive, l'application de chaleur, et de l'application de pression.

11. Procédé de fabrication d'un stratifié (100) à motif de décoration interne selon la revendication 9, dans lequel ladite étape de liaison comprend l'étape de thermoformage ou de laminage.

12. Procédé de fabrication d'un stratifié (100) à motif de décoration interne selon la revendication 10, dans lequel ladite étape de liaison comprend l'étape d'application d'une température dans l'intervalle de 0°C à 300°C et d'une pression de 0 atmosphère minimum.

13. Procédé de fabrication d'un stratifié (100) à motif de décoration interne selon l'une quelconque des revendications 9 à 12, qui comprend en outre le dépôt de particules (310) sur les couches centrales (120) avant de lier ladite couche composite de feuilles.

14. Procédé de fabrication d'un stratifié (100) à motif de décoration interne selon l'une quelconque des revendications 9 à 13, dans lequel lesdites feuilles thermoplastiques sont choisies parmi le groupe de thermoplastiques composé : d'acétate de cellulose, de propionate d'acétate de cellulose, de polycarbonate, de TPE et de nylon.

15. Procédé de fabrication d'un stratifié (100) à motif de décoration interne selon la revendication 9, dans lequel lesdits articles, qui sont en trois dimensions, et qui sont enfermés dans les couches centrales, sont choisis parmi le groupe d'articles qui comprend : des fleurs séchées, des faux diamants, des feuilles séchées et un logo en feuille métallique.

16. Procédé de fabrication d'un stratifié (100) à motif de décoration interne selon la revendication 9, dans lequel ledit liquide (410, 420) enfermé dans les couches centrales (120) est choisi parmi le groupe composé : d'eau colorée ou transparente, d'un liquide à base d'huile, et de silicone liquide.
